# FASCICULE DE BREVET EUROPEEN

(11) **EP 1 672 731 B1**
(45) Date de publication et mention de la délivrance du brevet: **27.02.2013**
(21) Numéro de dépôt: 05292631.8
(22) Date de dépôt: 09.12.2005
(51) Int. Cl.: H01M 10/50, H01M 2/10, H01M 2/02

(54) **Batterie comportant une pluralité d'éléments placés côte à côte dans un coffre**
Batterie mit mehreren in einem Gehäuse nebeneinander gesetzte Elemente
Battery with a plurality of elements placed side-by-side in a box

(30) Priorité: 17.12.2004 FR 0413529
(43) Date de publication de la demande: 21.06.2006
(73) Titulaire: ENERSYS SARL, 62033 Arras (FR)
(72) Inventeur: Lenain, Pierre, 62000 Arras (FR); Le Rhun, Véronique, 62000 Arras (FR)
(74) Mandataire: Neyret, Daniel Jean Marie

(56) Documents cités:
- EP-A- 0 704 919
- EP-A- 0 806 805
- WO-A-2004/081686
- PATENT ABSTRACTS OF JAPAN vol. 2002, no. 09, 4 septembre 2002 (2002-09-04) -& JP 2002 134177 A (MATSUSHITA ELECTRIC IND CO LTD), 10 mai 2002 (2002-05-10)
- PATENT ABSTRACTS OF JAPAN vol. 1998, no. 10, 31 août 1998 (1998-08-31) -& JP 10 144266 A (JAPAN STORAGE BATTERY CO LTD), 29 mai 1998 (1998-05-29)

## Description

L'invention concerne le domaine des sources d'énergie électrique, notamment les batteries pour véhicules électriques.

Les véhicules électriques utilisent des sources d'énergie embarquée qui sont des batteries d'accumulateurs secondaires de type plomb-acide, nickel-cadmiun, nickel-zinc, lithium, lithium-polymère, lithium-ion...

Une batterie traction pour véhicule électrique est constituée d'éléments reliés en série ou en série-parallèle et placés dans un coffre au contact les uns des autres. Au cours du fonctionnement de la batterie en charge ou en décharge, la chaleur dégagée par les éléments entraîne des variations importantes de température entre ces éléments, ainsi que sur leurs surfaces.

Les différences de température observées d'un élément à l'autre sont directement liées à leur positionnement dans le coffre. Ce sont les éléments situés au centre du coffre qui sont sujets à l'élévation de température la plus importante, par suite de la transmission directe de la chaleur entre les éléments.

De plus, le dégagement de chaleur au niveau de chaque élément pris isolément se produit principalement dans le tiers supérieur de l'élément. Il en résulte l'existence de gradients de température sur les surfaces même des éléments, avec également des pics de température localisés. Ils ont pour conséquence des différences d'engagement de la matière active sur la surface des électrodes. Elles peuvent se traduire par un vieillissement prématuré des électrodes, donc par une dégradation des performances des éléments.

On a imaginé, pour améliorer l'évacuation de la chaleur produite par les éléments, d'interposer entre ceux-ci des parois ondulées pour former des canaux de ventilation, en coopération avec des ouvertures ménagées dans le coffre où sont disposés les éléments (voir le document FR-A-2 210 018). Cependant, pour être efficace, une telle solution nécessite, de préférence, l'adjonction au coffre de moyens assurant une circulation d'air forcée. Cela rend l'installation plus encombrante et/ou réduit l'espace disponible pour les éléments au profit de l'espace nécessaire à l'installation du système de ventilation. De plus, si cette solution permet d'évacuer une partie de la chaleur produite par les éléments de la batterie, elle est peu efficace pour diminuer les hétérogénéités de température sur leurs parois. Enfin la batterie est elle-même utilisée comme générateur pour faire fonctionner les ventilateurs, ce qui consomme de l'énergie.

Le but de l'invention est de proposer une conception de batterie comportant une pluralité d'éléments placés dans un coffre permettant de résoudre au mieux ces problèmes d'homogénéité thermique.

A cet effet, l'invention a pour objet une batterie du type comportant une pluralité d'éléments placés côte à côte dans un coffre, caractérisée en ce que lesdits éléments sont séparés les uns des autres et des parois du coffre, au moins sur certaines de leurs faces, par des feuilles d'un matériau présentant une conductivité thermique dans son plan supérieure à 250W/m.K et une conductivité thermique selon son épaisseur inférieure à 20W/m.K.

Au moins certaines desdites feuilles peuvent s'étendre entre les faces étroites du coffre.

Au moins certaines desdites feuilles peuvent s'étendre entre les faces larges du coffre.

Selon une variante de l'invention, au moins certaines desdites feuilles sont indépendantes des éléments et des parois du coffre.

Lesdites feuilles indépendantes peuvent s'étendre sans interruption entre deux parois opposées du coffre.

Selon une autre variante de l'invention au moins certaines desdites feuilles revêtent des parois extérieures des éléments et/ou des parois du coffre.

Ledit matériau peut être du graphite.

Comme on l'aura compris, l'invention consiste à prévoir, dans le coffre de la batterie, des feuilles de séparation des éléments, ces feuilles ayant la propriété de présenter d'une part une conductivité thermique élevée dans les directions de leur plan, et d'autre part une conductivité thermique très significativement plus faible dans la direction de leur épaisseur.

Ces feuilles de séparation peuvent être indépendantes des éléments et disposées entre eux au moment de l'assemblage de la batterie. Elles peuvent aussi être fixées aux parois des éléments, voire également aux parois du coffre, avant la mise en place des éléments.

De cette façon, les feuilles de séparation procurent une homogénéisation de la température sur la hauteur des éléments, et aussi entre les éléments se trouvant au contact d'une même face d'une même feuille.

Par ailleurs, elles empêchent la chaleur dégagée par un élément de se propager excessivement vers l'élément qui lui fait face. On diminue ainsi nettement l'accumulation de chaleur sur les éléments situés au centre du coffre habituellement constatée.

Des matériaux pouvant constituer ces feuilles de séparation présentent généralement une structure lamellaire. Parmi eux, le graphite est un exemple privilégié. Sa conductivité thermique dans le plan peut atteindre 370 W/m.K (donc de l'ordre de celle de métaux tels que l'aluminium et le cuivre), et peut être seulement de 6,5 W/m.K selon son épaisseur. Il présente donc une anisotropie thermique extrêmement marquée qu'on ne retrouverait pas sur des feuilles métalliques. Cette anisotropie est très bien adaptée au rôle qu'on veut faire jouer aux feuilles de séparation selon l'invention. De plus, c'est un matériau facilement manipulable et couramment disponible.

L'invention sera mieux comprise à la lecture de la description qui suit, donnée en référence aux figures annexées suivantes :
- la figure 1 qui montre en vue de dessus un exemple de batterie selon l'invention ;
- la figure 2 qui montre ce même exemple de batterie vu en coupe transversale selon II-II ;
- la figure 3 qui montre ce même exemple vu en perspective ;
- la figure 4 qui montre une autre variante de l'invention.

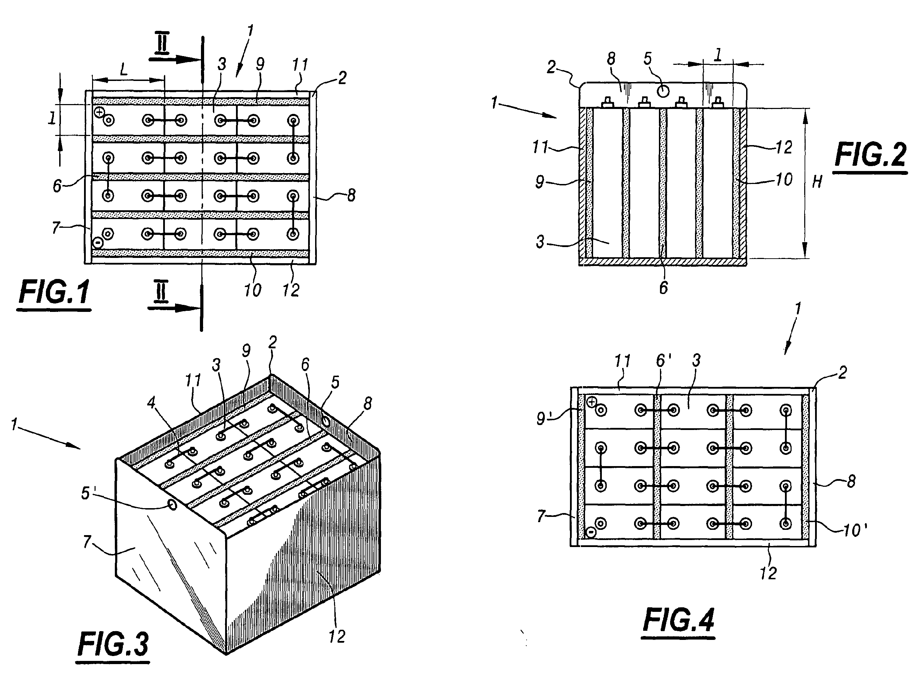

Comme on le voit sur les figures 1 et 3, un exemple de batterie 1 selon l'invention se compose d'un coffre 2 parallélépipédique ouvert sur sa face supérieure, dans lequel sont disposés un certain nombre d'éléments 3 (douze dans l'exemple représenté, disposés en quatre rangées et trois colonnes) ayant, par exemple, chacun une force électromotrice de 2V, et connectés en série par des moyens de connexion 4. Chaque élément 3 est parallélépipédique, de longueur L, de largeur I et de hauteur H. Le coffre 2 comporte, dans les parties supérieures de deux de ses faces opposées, des orifices 5, 5' pour sa manutention. Toutes ces caractéristiques sont parfaitement classiques et ne nécessitent pas d'être davantage décrites.

Selon l'invention, les différentes rangées d'éléments 3 sont séparées par des feuilles de graphite 6 qui s'étendent dans cet exemple entre les deux faces étroites 7, 8 du coffre 2. D'autres feuilles de graphite 9, 10 séparent les rangées d'éléments 3 extrêmes des faces larges 11, 12 du coffre 2. Dans l'exemple représenté, on a choisi de ne pas disposer de feuilles de graphite entre les colonnes d'éléments 3, donc entre les faces étroites des éléments 3, qui sont donc directement au contact les uns des autres à ce niveau. Il n'y a pas, non plus, de feuilles de graphite entre les colonnes extrêmes d'éléments 3 et les faces étroites 7, 8 du coffre 2. Mais bien entendu, il demeurerait conforme à l'invention de prévoir, en plus des feuilles de graphite 6, 9, 10 représentées sur les figures, d'autres feuilles de graphite séparant les faces étroites d'éléments 3 contigus ainsi que les colonnes extrêmes d'éléments 3 et les faces étroites 7, 8 du coffre 2. Le choix des emplacements des feuilles de graphite s'effectue en fonction de divers critères liés au plan du coffre et à l'espace disponible. Habituellement, on privilégiera si possible l'installation des feuilles 6, 9, 10 entre les deux faces étroites 7, 8 du coffre 2, pour traiter la surface la plus étendue possible.

Dans la variante représentée sur la figure 4, on a disposé des feuilles de graphite 9', 10' le long des faces étroites 7, 8 du coffre 2 et des feuilles de graphite 6' séparant les colonnes d'éléments 3. Ces dernières feuilles 6' s'étendent donc entre les faces larges 11, 12 du coffre 2 et séparent les éléments 3 d'une même ligne au voisinage de leurs bornes. L'expérience montre que c'est cette disposition qui donne les meilleurs résultats du point de vue de la prévention de l'accumulation de chaleur dans le centre de la batterie 1.

Typiquement, les feuilles de graphite (6, 9, 10 ; 6', 9', 10') ont chacune une épaisseur de l'ordre de 1 à 10mm. Cette épaisseur est choisie en fonction des résultats que l'on souhaite atteindre et de l'espace disponible dans le coffre (en particulier si l'invention doit être appliquée à une batterie non prévue initialement pour son application).

Dans les exemples représentés, les feuilles de graphite (6, 9, 10 ; 6', 9', 10') sont indépendantes des éléments 3 et du coffre 2. Elles sont mises en place dans le coffre 2 au moment de l'assemblage de la batterie. Toutefois, on peut très bien prévoir (en plus ou à la place des feuilles indépendantes 6, 9, 10 ; 6', 9', 10') que des feuilles de graphite revêtent au moins certaines des parois extérieures des éléments et/ou au moins certaines des parois du coffre 2 avant la mise en place des éléments 3 dans le coffre 2. Une telle solution présente principalement deux avantages. Si l'adhésion du graphite sur l'élément 3 est bonne et si le matériau adhésif utilisé n'est pas trop isolant, cela assure une très bonne conduction de la chaleur entre l'élément 3 et la feuille de graphite. L'homogénéisation de la température sur la face correspondante de l'élément 3 n'en est que meilleure. De plus, on crée ainsi une interface entre les feuilles de graphite revêtant deux éléments 3 se faisant face (ou entre un élément 3 et la face du coffre 2 contre laquelle il est disposé). Cette interface contribue à gêner la propagation de la chaleur.

Dans l'exemple représenté, les feuilles de graphite (6, 9, 10 ; 6', 9', 10') s'étendent toutes d'une extrémité à l'autre du coffre 2, sans interruption. Il demeurerait toutefois dans l'esprit de l'invention de remplacer ces feuilles uniques (6, 9, 10 ; 6', 9', 10') par une succession de feuilles, de préférence contiguës. C'est d'ailleurs ce qui se produit lorsqu'on utilise des feuilles de graphite recouvrant les éléments 3 préalablement à leur mise en place dans le coffre 2.

On peut également adjoindre au coffre 2 de la batterie ou à son environnement des dispositifs favorisant la dissipation de la chaleur par les feuilles de graphite (6, 9, 10 ; 6', 9', 10'), par exemple des ouies de ventilation pratiquées dans les parois du coffre 2, et/ou un ou des ventilateurs. Il doit cependant être entendu que ce n'est pas indispensable, l'objectif premier de l'invention n'étant pas de favoriser le refroidissement global de la batterie mais de limiter ses gradients thermiques, d'une part sur la hauteur des éléments 3 pris individuellement, et d'autre part entre des éléments 3 contigus.

Toute la description qui précède a envisagé l'utilisation du graphite comme matériau constitutif des feuilles (6, 9, 10 ; 6', 9', 10'). Il présente les caractéristiques thermiques souhaitées et il est facile à manipuler. Mais des feuilles d'autres matériaux présentant une conductivité thermique dans leur plan et une anisotropie thermique comparables pourraient être utilisés.

De manière générale, pour la mise en oeuvre de l'invention on utilise des matériaux présentant une conductivité thermique dans leur plan d'au moins 250W/m.K et une conductivité thermique selon leur épaisseur d'au plus 20W/m.K.

L'invention s'applique au cas de batteries formées de plusieurs éléments contigus placés dans un coffre, quels que soient le type précis de ces éléments et l'emploi de ces batteries, l'application aux batteries traction de véhicules électriques étant un exemple privilégié mais non exclusif. L'invention est applicable avec profit également aux batteries stationnaires. Dans tous les cas, la diminution des déséquilibres thermiques entre les éléments procure une optimisation de la charge des éléments les uns par rapport aux autres et une augmentation de la durée de vie de la batterie.

## Revendications

1. Batterie (1) du type comportant une pluralité d'éléments (3) contigus placés côte à côte dans un coffre (2), **caractérisée en ce que** lesdits éléments (3) sont séparés les uns des autres et des parois (11, 12) du coffre (2), au moins sur certaines de leurs faces, par des feuilles (6, 9, 10 ; 6', 9', 10') d'un matériau présentant une conductivité thermique dans son plan supérieure à 250W/m.K et une conductivité thermique selon son épaisseur inférieure à 20W/m.K.

2. Batterie (1) selon la revendication 1, **caractérisée en ce que** au moins certaines desdites feuilles (6, 9, 10) s'étendent entre les faces étroites (7, 8) du coffre (2).

3. Batterie (1) selon la revendication 1 ou 2, **caractérisée en ce que** au moins certaines desdites feuilles (6', 9', 10') s'étendent entre les faces larges (11, 12 du coffre (2)_{.}

4. Batterie (1) selon l'une des revendications 1 à 3, **caractérisée en ce que** au moins certaines desdites feuilles (6, 9, 10 ; 6', 9', 10') sont indépendantes des éléments (3) et des parois (11, 12) du coffre (2).

5. Batterie (1) selon la revendication 4, **caractérisée en ce que** lesdites feuilles indépendantes (6, 9, 10 ; 6', 9', 10') s'étendent sans interruption entre deux parois (7, 8) opposées du coffre (2).

6. Batterie (1) selon l'une des revendications 1 à 5, **caractérisée en ce que** au moins certaines desdites feuilles revêtent des parois extérieures des éléments (3) et/ou des parois du coffre (2).

7. Batterie (1) selon l'une des revendications 1 à 6, **caractérisée en ce que** ledit matériau est du graphite.

## Claims

1. A battery (1) of the type including a plurality of contiguous elements (3) placed side-by-side in a case (2), **characterized in that** said elements (3) are separated from each other and from the walls (11, 12) of the case (2), at least on some of their faces, by sheets (6, 9, 10; 6', 9', 10') of a material having heat conductivity in its plane of more than 250W/m.K and heat conductivity along its thickness of less than 20 W/m.K.

2. The battery (1) according to claim 1, **characterized in that** at least some of said sheets (6, 9, 10) extend between the narrow faces (7,8) of the case (2).

3. The battery (1) according to claim 1 or 2, **characterized in that** at least some of said sheets (6', 9', 10') extend between the wide faces (11, 12) of the case (2).

4. The battery (1) according to one of claims 1 to 3, **characterized in that** at least some of said sheets (6, 9, 10; 6', 9', 10') are independent of the elements (3) and of the walls (11, 12) of the case (2).

5. The battery (1) according to claim 4, **characterized in that** said independent sheets (6, 9, 10; 6', 9', 10') extend without any interruption between two opposite walls (7,8) of the case (2).

6. The battery (1) according to one of claims 1 to 5, **characterized in that** at least some of said sheets coat the outer walls of the elements (3) and/or the walls of the case (2).

7. The battery (1) according to one of claims 1 to 6, **characterized in that** said material is graphite.

## Patentansprüche

1. Batterie (1) der Bauart, die eine Vielzahl aneinander angrenzender Elemente (3) aufweist, die Seite an Seite in einer Box (2) platziert sind, **dadurch gekennzeichnet, dass** die Elemente (3) zumindest auf einigen ihrer Seiten durch Bögen (6, 9, 10; 6', 9', 10') eines Materials, das in seiner Ebene eine thermische Leitfähigkeit über 250 W/m.K und gemäß seiner Dicke eine thermische Leitfähigkeit unter 20 W/m.K aufweist, voneinander und von den Wänden (11, 12) der Box (2) getrennt sind.

2. Batterie (1) nach Anspruch 1, **dadurch gekennzeichnet, dass** sich mindestens bestimmte Bögen (6, 9, 10) zwischen den schmalen Seiten (7, 8) der Box (2) erstrecken.

3. Batterie (1) nach Anspruch 1 oder 2, **dadurch gekennzeichnet, dass** sich mindestens einige Bögen (6', 9', 10') zwischen den breiten Seiten (11, 12) der Box (2) erstrecken.

4. Batterie (1) nach einem der Ansprüche 1 bis 3, **dadurch gekennzeichnet, dass** mindestens einige Bögen (6, 9, 10; 6', 9', 10') unabhängig von den Elementen (3) und den Wänden (11, 12) der Box (2) sind.

5. Batterie (1) nach Anspruch 4, **dadurch gekennzeichnet, dass** sich die unabhängigen Bögen (6, 9, 10; 6', 9', 10') ohne Unterbrechung zwischen zwei gegenüberliegenden Wänden (7, 8) der Box (2) erstrecken.

6. Batterie (1) nach einem der Ansprüche 1 bis 5, **dadurch gekennzeichnet, dass** mindestens einige Bögen Außenwände der Elemente (3) und/oder Wände der Box (2) bedecken.

7. Batterie (1) nach einem der Ansprüche 1 bis 6, **dadurch gekennzeichnet, dass** das Material Graphit ist.
